# EUROPEAN PATENT SPECIFICATION

(11) **EP 3 680 512 B1**
(45) Date of publication and mention of the grant of the patent: **01.11.2023**
(21) Application number: 20151113.6
(22) Date of filing: 10.01.2020
(51) Int. Cl.: F16F 15/123

(54) **DAMPER DEVICE**
DÄMPFERVORRICHTUNG
DISPOSITIF D'AMORTISSEUR

(30) Priority: 10.01.2019 JP 2019002909
(43) Date of publication of application: 15.07.2020
(73) Proprietor: AISIN CORPORATION, Kariya-shi, Aichi-ken 448-8650 (JP)
(72) Inventor: KATAOKA, Naoya, KARIYA-SHI, AICHI-KEN, 448-8650 (JP)
(74) Representative: Cabinet Beau de Loménie

(56) References cited:
- EP-A2- 3 026 294
- WO-A1-2018/061467
- US-A1- 2015 240 911
- US-B2- 9 599 186

## Description

### TECHNICAL FIELD

A technique disclosed in this disclosure relates to a damper device.

### BACKGROUND DISCUSSION

In a vehicle or the like, a damper device which absorbs a vibration of a torque transmitted to a transmission from a drive source such as an engine is disposed on a torque transmission path between the drive source and the transmission. For example, the damper device is incorporated in a clutch device.

As a general configuration of the damper device, a technique is known in which the vibration in a torsional direction caused by torque fluctuations is absorbed and attenuated in such a way that elastic deformation of a coil spring is used by interposing the coil spring between a first rotating body (for example, a disc plate) serving as an input member and a second rotating body (for example, a hub) serving as an output member, both of which can relatively rotate with respect to each other.

As a specific configuration of the damper device, JP H7-293578A and JP 2018-112223A disclose the damper device as follows. A cushion material (torsion damper in JP H7-293578A) is disposed inside the coil spring between a pair of sheet members for supporting both ends of the coil spring. In this manner, torsional rigidity is partially improved in a torsional characteristic between the disc plate and a clutch hub.

In a hybrid vehicle which uses the engine and an electric motor as the drive source, an inertial force is present due to not only the engine but also the heavy electric motor having a heavy load. Consequently, compared to a vehicle which uses only the engine as the drive source in the related art, it is known that noise or the vibration generally increases in the hybrid vehicle. Therefore, in recent years, the damper device itself needs performance improvement. In this regard, Pamphlet of International Publication No. WO2017/032370 proposes a technique as follows. An intermediate member is disposed between the input member and the output member, and a dynamic vibration absorber is located in the intermediate member.

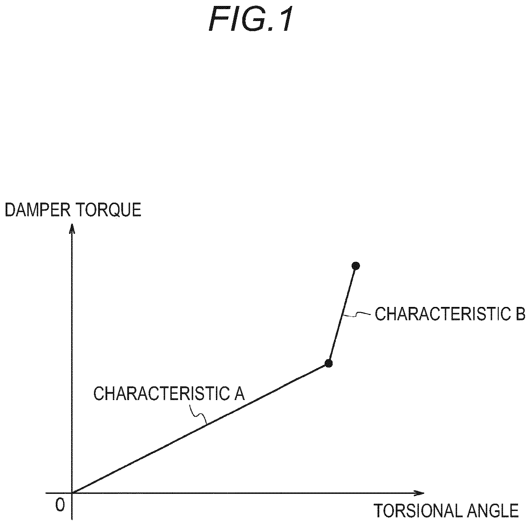

However, according to the damper device disclosed in each of JP H7-293578A and JP 2018-112223A, the torsional characteristic between the disc plate and the clutch hub shows a dual stage characteristic including a characteristic A and a characteristic B as illustrated in Fig. 1. In a case of the damper device, when the characteristic is switched from the characteristic A to the characteristic B (or from the characteristic B to the characteristic A), there is a problem in that an impact or the vibration may be caused by a sudden characteristic change. Documents WO 2018/061467 and US 2015/0240911 are also known and disclose other examples of damper devices.

Thus, a need exists for a high-performance damper device in which the impact or the vibration is suppressed even at a characteristic switching timing.

### SUMMARY

A damper device according to an aspect of this disclosure includes a first rotating body, a second rotating body coaxial with the first rotating body, and relatively rotating with respect to the first rotating body, an intermediate member coaxial with the first rotating body and the second rotating body and relatively rotating with respect to the first rotating body, and an elastic mechanism that has a first elastic body elastically coupling the first rotating body and the intermediate member with each other in a rotation direction, a second elastic body elastically coupling the intermediate member and the second rotating body with each other in the rotation direction, a pair of first sheet members supporting the first elastic body, a pair of second sheet members supporting the second elastic body and a floating elastic body to be accommodated inside at least one of the first elastic body and the second elastic body. The first rotating body further has a first stopper restricting relative rotation of the second rotating body, and a second stopper restricting relative rotation of the intermediate member.

According to this configuration, the damper device has a torsional characteristic including at least three or more stages. In this manner, a sudden characteristic change is suppressed. As a result, it is possible to suppress an impact or a vibration caused by the characteristic change.

In the damper device according to the aspect, it is preferable that a pinching portion for pinching the floating elastic body is provided to at least one of the pair of first sheet members and the pair of second sheet members.

According to this configuration, it is possible to efficiently express the torsional characteristic using the floating elastic body.

In the damper device according to the aspect, it is preferable that a pair of the intermediate members are disposed across the second rotating body.

According to this configuration, the damper device can have the torsional characteristic including at least three or more stages, and the impact or the vibration can be efficiently attenuated.

In the damper device according to the aspect, the first rotating body has a pair of plate members and a spacer to be accommodated between the pair of plate members, the second stopper is disposed in the plate member, and the first stopper is disposed in the spacer.

According to this configuration, the damper device can have the torsional characteristic including at least three or more stages.

In another configuration, which is not claimed, the first rotating body has a pair of plate members and a spacer to be accommodated between the pair of plate members, and the first stopper and the second stopper are disposed in the spacer.

According to this configuration, the damper device can have the torsional characteristic including at least three or more stages.

According to various embodiments, it is possible to provide a high-performance damper device in which the impact or the vibration is suppressed even at a characteristic switching timing.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a brief characteristic diagram schematically illustrating a torsional characteristic in a damper device in the related art;
Fig. 2 is a brief top view schematically illustrating a configuration of a damper device according to an embodiment disclosed here;
Fig. 3 is a brief sectional view schematically illustrating the configuration of the damper device illustrated in Fig. 2, which is taken along line A-A;
Fig. 4 is a brief perspective view illustrating the configuration of the damper device according to the embodiment, in which each configuration element is illustrated in an exploded view;
Fig. 5A is a brief top view schematically illustrating a state where the damper device illustrated in Fig. 2 is operated and a hub relatively rotates with respect to a disc plate;
Fig. 5B is a brief top view schematically illustrating a state where the damper device illustrated in Fig. 2 is operated and the hub relatively rotates with respect to the disc plate;
Fig. 5C is a brief top view schematically illustrating a state where relative rotation of the hub is restricted after the damper device illustrated in Fig. 2 is operated and the hub relatively rotates with respect to the disc plate;
Fig. 6A is a brief top view schematically illustrating a configuration of a damper device according to another embodiment disclosed here;
Fig. 6B is a brief top view schematically illustrating a state where the damper device illustrated in Fig. 6A is operated and a hub relatively rotates with respect to a disc plate;
Fig. 6C is a brief top view schematically illustrating a state where the damper device illustrated in Fig. 6A is operated and the hub relatively rotates with respect to the disc plate;
Fig. 6D is a brief top view schematically illustrating a state where the damper device illustrated in Fig. 6A is operated and the hub relatively rotates with respect to the disc plate;
Fig. 6E is a brief top view schematically illustrating a state where relative rotation of the hub is restricted after the damper device illustrated in Fig. 6A is operated and the hub relatively rotates with respect to the disc plate; and
Fig. 7 is a brief characteristic diagram schematically illustrating a torsional characteristic in the damper device according to the embodiment.

### DETAILED DESCRIPTION

Hereinafter, various embodiments disclosed here will be described with reference to the accompanying drawings. The same reference numerals will be given to configuration elements common to each other in the drawings. It should be noted that the configuration elements expressed in a certain drawing may be omitted in another drawing for convenience of description. Furthermore, it should be noted that the accompanying drawings are not necessarily illustrated by using exact scales.

### 1. Configuration of Damper Device

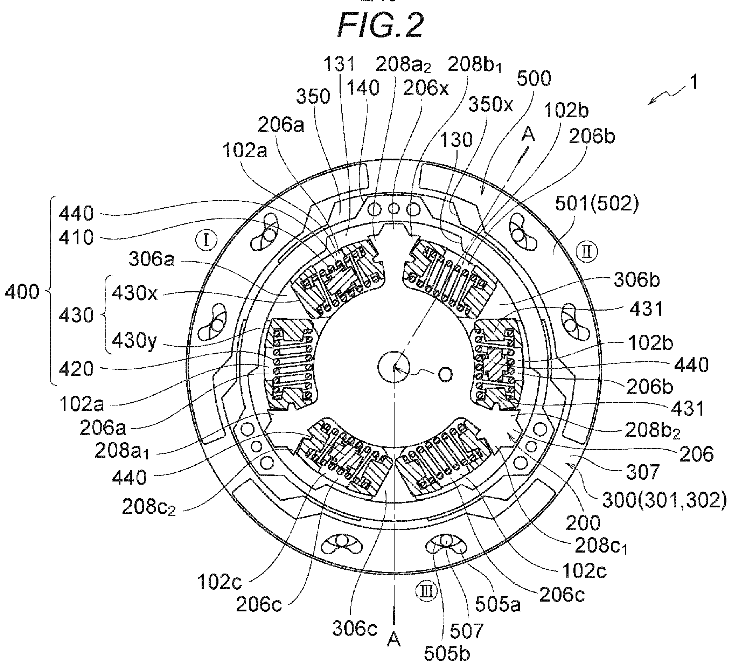

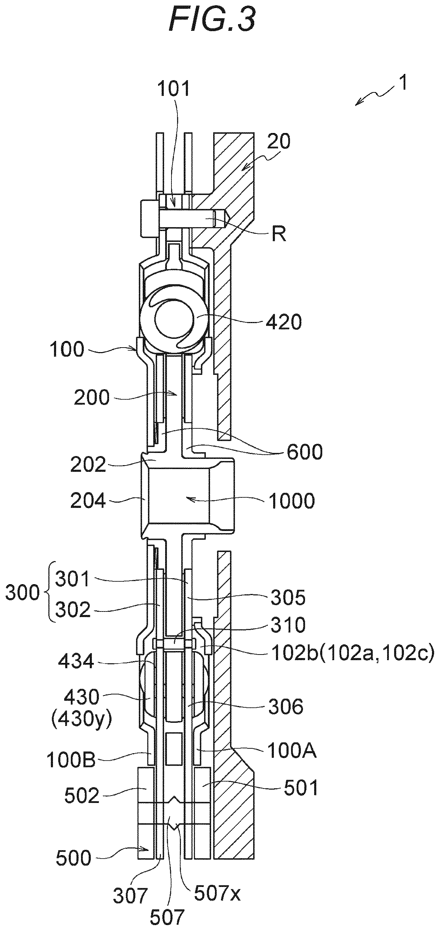

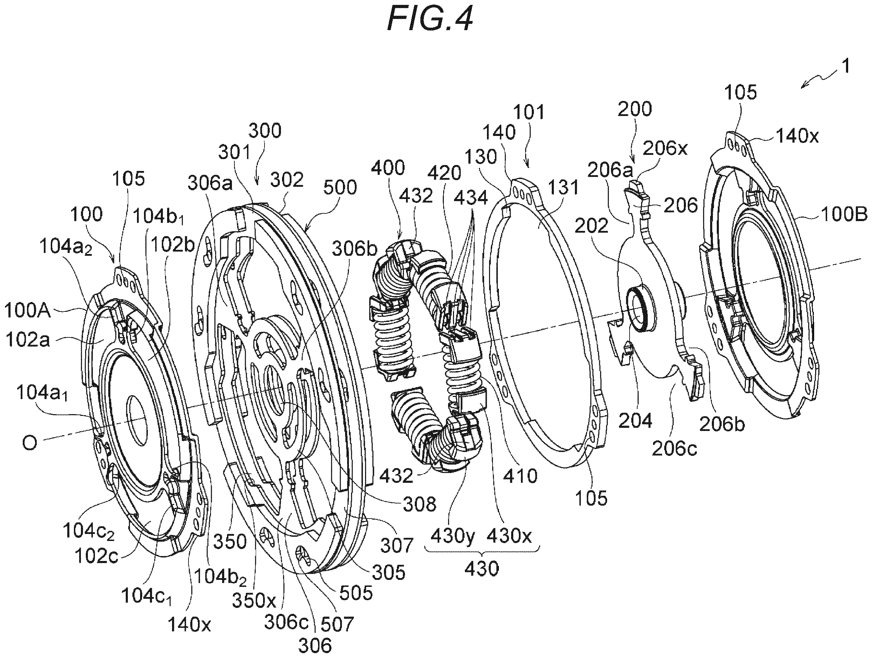

An outline of an overall configuration of a damper device according to an embodiment disclosed here will be described with reference to Figs. 2 to 4. Fig. 2 is a brief top view schematically illustrating a configuration of a damper device 1 according to the embodiment. Fig. 3 is a brief sectional view schematically illustrating the configuration of the damper device 1 illustrated in Fig. 2, which is taken along line A-A. Fig. 4 is a brief perspective view illustrating the configuration of the damper device 1 according to the embodiment, in which each configuration element is illustrated in an exploded view. In Fig. 2, it should be noted that one of a first disc plate 100A and a second disc plate 100B which serve as a pair of plate members (to be described later) and one of a first intermediate plate 301 and a second intermediate plate 302 which serve as a pair of plate members (to be described later) are omitted in the illustration for convenience of the drawings.

The damper device 1 according to the embodiment transmits a drive force to a transmission from a drive source such as an engine and a motor by being pinched between a flywheel 20 and a pressure plate (not illustrated), for example. A structure for pinching the damper device 1 between the flywheel 20 and the pressure plate is well known. Accordingly, detailed description thereof will be omitted.

The damper device 1 absorbs and attenuates a torque vibration. As illustrated in Figs. 2 to 4, the damper device 1 mainly includes a disc plate 100 serving as a first rotating body, a hub 200 serving as a second rotating body, an intermediate member 300, an elastic mechanism 400 including a first elastic body 410 and a second elastic body 420, and a dynamic vibration absorber 500.

### 1-1. Hub 200

For example, the hub 200 is formed of a metal material, has a substantially annularly extending shape as a whole, and is disposed around a central axis O so as to be relatively rotatable with respect to the disc plate 100 (to be described later). As illustrated in Figs. 3 and 4, the hub 200 can be joined in a spline joining method by inserting an input shaft 1000 of a transmission into a through-hole 204 formed in a cylindrical portion 202 having a substantially cylindrical shape. The hub 200 has a flange 206 having a substantially annular shape extending from the cylindrical portion 202 in a radial direction. The hub 200 can adopt, for example, a configuration in which the cylindrical portion 202 and the flange 206 are integrated with each other, and a configuration in which the cylindrical portion 202 and the flange 206 are separated from each other and a micro spring is installed between both of these.

An outer periphery of the flange 206 has at least one notch formed along a circumferential direction. According to the embodiment, as an example, the outer periphery of the flange 206 has three notches 206a, 206b, and 206c formed at an equal interval along the circumferential direction (interval of 120 degree in the circumferential direction). As illustrated in Fig. 2, in a top view of the damper device 1, if the damper device 1 is conceptually divided into three regions I, II, and III each having a fan shape, the flange 206 has the first notch 206a, the second notch 206b, and the third notch 206c which are respectively associated with the regions I to III. The number of the notches is not limited to three. The notches are disposed in association with a configuration of the elastic mechanism 400 (to be described later), more specifically, the number of elastic units including the first elastic body 410 and the second elastic body 420 as one set.

The first notch 206a, the second notch 206b, and the third notch 206c can accommodate the elastic mechanism 400 (to be described later) by forming the notches in this way. In association with the region I, the flange 206 has an engagement portion (first engagement portion on one end side) 208a, on one end side and an engagement portion (first engagement portion on the other end side) 208a₂ on the other end side facing the one end side. In association with the region II, the flange 206 has an engagement portion (second engagement portion on one end side) 208b₁ on one end side and an engagement portion (second engagement portion on the other end side) 208b₂ on the other end side facing the one end side. In association with the region III, the flange 206 has an engagement portion (third engagement portion on one end side) 208c, on one end side and an engagement portion (third engagement portion on the other end side) 208c₂ on the other end side facing the one end side.

The engagement portions 208a₁, 208b₁, and 208c₁ on each one end side can have the same configuration, and the engagement portions 208a₂, 208b₂, and 208c₂ on each other end side can have the same configuration. The engagement portions 208a₁, 208b₁, and 208c₁ on each one end side can have a configuration symmetrical with that of the engagement portions 208a₂, 208b₂, and 208c₂ on each other end side.

### 1-2. Disc Plate 100

The disc plate 100 on the input side in the power transmission path is formed of a metal material, for example. As illustrated in Figs. 2 to 4, the disc plate 100 is disposed across the hub 200 and the intermediate member 300 (to be described later) to be rotatable around the hub 200 and the central axis O. The disc plate 100 includes the first disc plate 100A and the second disc plate 100B which serve as a pair of plate members disposed on both sides of the hub 200 and the intermediate member 300 (to be described later) in an axial direction. The first disc plate 100A and the second disc plate 100B have a symmetrical shape in the axial direction. A spacer 101 which can properly adjust both positions in the axial direction is interposed therebetween, and both of these are joined to each other by using a plurality of rivets R and the like via a through-hole 105 in the vicinity of both outer peripheries.

In cooperation with each other, and in association with each of the regions I to III, the first disc plate 100A and the second disc plate 100B have a shape that swells in the axial direction so as to form accommodation regions (three accommodation regions in an example illustrated in Fig. 2) for accommodating the elastic mechanism 400. Each accommodation region extends in a substantially linear shape or in a substantially arc shape along the circumferential direction of the disc plate 100 in order to accommodate the first elastic body 410 and the second elastic body 420 which extend along the circumferential direction of the disc plate 100.

Specifically, referring to Figs. 2 and 4, in association with the regions I to III, the first disc plate 100A and the second disc plate 100B form a first accommodation region 102a, a second accommodation region 102b, and a third accommodation region 102c which respectively extend along the circumferential direction. The first accommodation region 102a is formed to correspond to the aforementioned first notch 206a, the second accommodation region 102b is formed to correspond to the aforementioned second notch 206b, and the aforementioned third accommodation region 102c is formed to correspond to the third notch 206c (The number of the accommodation regions also corresponds to the number of the notches disposed in the hub 200).

Focusing on the region I, as illustrated in Fig. 4, the first disc plate 100A and the second disc plate 100B include one end surface (first one end surface) 104a₁ and the other end surface (first other end surface) 104a₂ facing the one end surface, as a side wall that surrounds the first accommodation region 102a. As an example, the first one end surface 104a, and the first other end surface 104a₂ extend along the axial direction of the disc plate 100.

Similarly, focusing on the region II, the first disc plate 100A and the second disc plate 100B include one end surface (second one end surface) 104b, and the other end surface (second other end surface) 104b₂ facing the one end surface, as a side wall that surrounds the second accommodation region 102b. Focusing on the region III, the first disc plate 100A and the second disc plate 100B include one end surface (third one end surface) 104c, and the other end surface (third other end surface) 104c₂ facing the one end surface, as a side wall that surrounds the third accommodation region 102c. In Fig. 2, a main portion of the disc plate 100 (first disc plate 100A or second disc plate 100B) is omitted in the illustration for convenience.

However, a gap G (not illustrated) for receiving the engagement portion 208a₁ on the first one end side is formed between the first one end surface 104a, formed by the first disc plate 100A and the first one end surface 104a, formed by the second disc plate 100B so that the engagement portion 208a, on the first one end side of the flange 206 in the hub 200 can enter the inside of the first accommodation region 102a. In addition, the gap G (not illustrated) for receiving the engagement portion 208a₂ on the first other end side is similarly formed between the first other end surface 104a₂ formed by the first disc plate 100A and the first other end surface 104a₂ formed by the second disc plate 100B so that the engagement portion 208a₂ on the first other end side can enter the inside of the first accommodation region 102a. These structures are similarly formed in the regions II and III.

As illustrated in Figs. 2 and 4, in order to increase stages of the torsional characteristic in the damper device 1, the hub 200 is excessively and relatively rotated with respect to the disc plate 100. For this reason, in order to prevent a possibility of close inter-line contact that the second elastic body 420 in the elastic mechanism 400 (to be described later) may be excessively compressed, the disc plate 100 (more specifically, the spacer 101) has a first stopper 130 that restricts the relative rotation of the hub 200.

A shape of the first stopper 130 is not particularly limited as long as the relative rotation of the hub 200 can be restricted. For example, it is possible to adopt a configuration as follows. A notch 131 capable of accommodating a tip portion 206x of the flange 206 in the hub 200 is disposed on an inner diameter side of the spacer 101, and a side wall of the notch 131 is used as the first stopper 130 capable of coming into contact with the tip portion 206x.

Furthermore, as illustrated in Figs. 2 and 4, in order to increase the stages of the torsional characteristic in the damper device 1, the intermediate member 300 (to be described later) is excessively and relatively rotated with respect to the disc plate 100. For this reason, in order to prevent a possibility of close inter-line contact that the first elastic body 410 may be excessively compressed, the spacer 101 has a second stopper 140 that restricts the relative rotation of the intermediate member 300. The second stopper 140 may be disposed in a pair of the first disc plate A and the second disc plate B instead of the spacer 101.

A shape of the second stopper 140 is not particularly limited as long as the relative rotation of the intermediate member 300 can be restricted. For example, it is possible to adopt a configuration as follows. A projecting portion capable of being accommodated in a notch 350 to be disposed in the intermediate member 300 is disposed outside the spacer 101 in the radial direction or outside the first disc plate A and the second disc plate B in the radial direction, and the projecting portion is used as the second stopper 140 capable of coming into contact with a side wall 350x of the notch 350 (in a case where the second stopper 140 is disposed in the first disc plate A and the second disc plate B, a projecting portion 140x in Fig. 4 is used as the second stopper 140).

### 1-3. intermediate Member 300

The intermediate member 300 is formed of a metal material, for example. As illustrated in Figs. 2 to 4, the intermediate member 300 is disposed across the hub 200 in the axial direction so as to be coaxial with the disc plate 100 and the hub 200 and relatively rotatable around the central axis O with respect to both of these. The intermediate member 300 includes the first intermediate plate 301 and the second intermediate plate 302 which serve as a pair of plate members disposed on both sides of the hub 200 in the axial direction. The first intermediate plate 301 and the second intermediate plate 302 have the same shape, and are fixed to each other by fixing means such as a fastening pin 310 so that both of these are rotatable integrally with each other. The first intermediate plate 301 and the second intermediate plate 302 may have mutually different shapes. For example, based on a difference in each rotational inertia mass between the first disc plate 100A and the second disc plate 100B, the first intermediate plate 301 can have a larger (or smaller) shape than the second intermediate plate 302 so that the first intermediate plate 301 has larger (or smaller) rotational inertia mass. In this manner, the damper device 1 as a whole can have an improved balance of the rotational inertia mass, and inclination with respect to the rotation center O can be reduced.

As illustrated in Fig. 4, the first intermediate plate 301 and the second intermediate plate 302 respectively have a disc-shaped inner circle portion 305, an annular outer ring portion 307, and a connecting portion 306 that connects the inner circle portion 305 and the outer ring portion 307 to each other.

As illustrated in Fig. 4, the inner circle portion 305 has an insertion hole 308 into which the hub 200 and a stepped bush 600 attached to an outer peripheral side of the cylindrical portion 202 of the hub 200 can be inserted. In this manner, as illustrated in Fig. 3, the first intermediate plate 301 and the second intermediate plate 302 are axially supported by the hub 200 via the bush 600 by connecting the inner circle portion 305 to the bush 600. Accordingly, the first intermediate plate 301 and the second intermediate plate 302 are reliably aligned in the axial direction and the radial direction. In this manner, misalignment of the first intermediate plate 301 and the second intermediate plate 302 is suppressed in the axial direction and the radial direction. Accordingly, stability is improved as the damper device 1 (power transmission loss can be suppressed). A configuration may be adopted in which only one of the first intermediate plate 301 and the second intermediate plate 302 is axially supported by the hub 200. In this manner, the rotational inertia mass of the pair of intermediate members 300 can be reduced. The first intermediate plate 301 and the second intermediate plate 302 may be aligned only in one direction of the axial direction and the radial direction. In this manner, assembling performance can be improved.

As illustrated in Fig. 4, the connecting portion 306 extends outward in the radial direction from an outer peripheral end of the inner circle portion 305, and connects the inner circle portion 305 and the outer ring portion 307 to each other. In association with the regions I to III, the connecting portion 306 has a first connecting portion 306a corresponding to the first accommodation region 102a disposed in the first notch 206a and the disc plate 100 which are disposed in the hub 200, a second connecting portion 306b corresponding to the second accommodation region 102b disposed in the second notch 206b and the disc plate 100 which are disposed in the hub 200, and a third connecting portion 306c corresponding to the third accommodation region 102c disposed in the third notch 206c and the disc plate 100 which are disposed in the hub 200.

The first connecting portion 306a is accommodated between the first elastic body 410 and the second elastic body 420 in the elastic mechanism 400, and engages with each of a first sheet member 430x that supports the first elastic body 410 and a second sheet member 430y that supports the second elastic body 420. The second connecting portion 306b and the third connecting portion 306c also engage with the first sheet member 430x and the second sheet member 430y, as in the first connecting portion 306a. An engagement structure between the first connecting portion 306a (and the second connecting portion 306b and the third connecting portion 306c) and the first sheet member 430x and the second sheet member 430y will be described in detail later.

The outer ring portion 307 forms an outer diameter of the intermediate member 300, and is disposed to support the dynamic vibration absorber 500 (to be described later). The intermediate member 300 has the outer ring portion 307. In this manner, as illustrated in Fig. 4, the outer diameter of the intermediate member 300 is set to be larger than the outer diameter of the elastic mechanism 400. Accordingly, without interfering with other configuration elements, the dynamic vibration absorber 500 can be reliably located at a position facing the outer ring portion 307 (outer peripheral end of the intermediate member 300).

As described above, the notch 350 (and the side wall 350x) capable of accommodating the second stopper 140 is (are) disposed in the outer ring portion 307.

### 1-4. Elastic Mechanism 400

The elastic mechanism 400 is configured to mainly include the first elastic body 410 using the coil spring, the second elastic body 420 similarly using the coil spring, a sheet member 430 (the first sheet member 430x and the second sheet member 430y) that supports the first elastic body 410 or the second elastic body 420, and a floating elastic body 440. As illustrated in Figs. 2 and 4, the first elastic body 410 and the second elastic body 420 are located to be aligned one by one in series in the circumferential direction, thereby forming a set of elastic units. In the embodiment shown in Figs. 2 and 4, a case is assumed where a positive torque is transmitted counterclockwise from a drive source such as an engine and a motor. The first elastic body 410 and the second elastic body 420 are located in each elastic unit in the order (order in which the second elastic body 420 is located next to the left rotation of the first elastic body 410). In a case where the positive torque is transmitted clockwise, the first elastic body 410 and the second elastic body 420 are located in each elastic unit in the order in which the second elastic body 420 is located next to the right rotation of the first elastic body 410.

In the embodiment illustrated in Figs. 2 and 4, as an example, the disc plate 100 has the three accommodation regions, that is, the first accommodation region 102a to the third accommodation region 102c (the hub 200 has the three notches, that is, the first notch 206a to the third notch 206c). Accordingly, one elastic unit (one first elastic body 410 and one second elastic body 420) is accommodated in each of the three accommodation regions, that is, in association with the respective regions I to III. In the respective regions I to III, both ends of the first elastic body 410 are supported by the pair of first sheet members 430x, and both ends of the second elastic body 420 are supported by the pair of second sheet members 430y. In this manner, the elastic mechanism 400 is located in an annular shape as a whole by the three elastic units and the sheet member 430.

Here, focusing on the region I, one end of the first sheet member 430x that supports the first elastic body 410 engages with each of the first other end surface 104a₂ disposed in the disc plate 100 and the engagement portion 208a₂ on the first other end side disposed in the hub 200. The other end of the first sheet member 430x that supports the first elastic body 410 engages with the first connecting portion 306a in the intermediate member 300.

As illustrated in Fig. 4, one end of the first sheet member 430x has a first groove portion 432, and the engagement portion 208a₂ on the first other end side disposed in the hub 200 is accommodated in the first groove portion 432, thereby enabling one end of the first sheet member 430x and the hub 200 to engage with each other. The other end of the first sheet member 430x has a second groove portion 434, and the first connecting portion 306a in the intermediate member 300 is accommodated in the second groove portion 434, thereby enabling the other end of the first sheet member 430x and the Intermediate member 300 to engage with each other.

Furthermore, one end of the second sheet member 430y that supports the second elastic body 420 engages with the first connecting portion 306a in the intermediate member 300, and the other end of the second sheet member 430y that supports the second elastic body 420 engages with each of the first one end surface 104a₁ disposed in the disc plate 100 and the engagement portion 208a, on the first one end side disposed in the hub 200.

As illustrated in Fig. 4, one end of the second sheet member 430y also has the second groove portion 434, and the first connecting portion 306a in the intermediate member 300 is accommodated in the second groove portion 434, thereby enabling one end of the second sheet member 430y and the intermediate member 300 to engage with each other. The other end of the second sheet member 430y also has the first groove portion 432, and the engagement portion 208a, on the first one end side disposed in the hub 200 is accommodated in the first groove portion 432, thereby enabling the other end of the second sheet member 430y and the hub 200 to engage with each other.

Similarly, focusing on the region II, one end of the first sheet member 430x that supports the first elastic body 410 engages with each of the second other end surface 104b₂ disposed in the disc plate 100 and the engagement portion 208b₂ on the second other end side disposed in the hub 200. The other end of the first sheet member 430x that supports the first elastic body 410 engages with the second connecting portion 306b in the intermediate member 300. Furthermore, one end of the second sheet member 430y that supports the second elastic body 420 engages with the second connecting portion 306b in the intermediate member 300, and the other end of the second sheet member 430y that supports the second elastic body 420 engages with each of the second one end surface 104b₁ disposed in the disc plate 100 and the engagement portion 208b, on the second one end side disposed in the hub 200. As in the region I, the first sheet member 430x and the second sheet member 430y have the first groove portion 432 and the second groove portion 434.

Similarly, focusing on the region III, one end of the first sheet member 430x that supports the first elastic body 410 engages with each of the third other end surface 104c₂ disposed in the disc plate 100 and the engagement portion 208c₂ on the third other end side disposed in the hub 200. The other end of the first sheet member 430x that supports the first elastic body 410 engages with the third connecting portion 306c in the intermediate member 300. Furthermore, one end of the second sheet member 430y that supports the second elastic body 420 engages with the third connecting portion 306c in the intermediate member 300, and the other end of the second sheet member 430y that supports the second elastic body 420 engages with each of the third one end surface 104c, disposed in the disc plate 100 and the engagement portion 208c₁ on the third one end side disposed in the hub 200. As in the region I, the first sheet member 430x and the second sheet member 430y have the first groove portion 432 and the second groove portion 434.

Each of the elastic units having the above-described configuration accommodates the intermediate member 300 (the first connecting portion 306a to the third connecting portion 306c) between the first elastic body 410 and the second elastic body 420. More precisely, the intermediate member 300 is accommodated between the first sheet member 430x and the second sheet member 430y.

According to the above-described configuration, the first elastic body 410 can elastically couple the disc plate 100 and the intermediate member 300 with each other in the rotation direction (the counterclockwise rotation direction) via the first sheet member 430x, and the second elastic body 420 can elastically couple the intermediate member 300 and the hub 200 with each other via the second sheet member 430y. That is, the power output from the drive source such as the engine and the motor is basically transmitted to the disc plate 100, the first sheet member 430x on one side, the first elastic body 410, the first sheet member 430x on the other side, the intermediate member 300, the second sheet member 430y on one side, the second elastic body 420, the second sheet member 430y on the other side, and the hub 200 in this order.

In the damper device 1 according to the embodiment, the floating elastic body 440 is accommodated inside the first elastic body 410 as illustrated in Fig. 2. The floating elastic body 440 may be any elastic body as long as the floating elastic body 440 has a spring constant higher than a spring constant of the first elastic body 410. For example, styrene/butadiene rubber or ethylene/propylene rubber may be used.

The floating elastic body 440 has the spring constant higher than the spring constant of the first elastic body 410 as described above. Accordingly, as will be described later, if the first elastic body 410 elastically deforms and the floating elastic body 440 is once pinched by a pinching portion 431 disposed in the first sheet member 430x, the subsequent elastic deformation of the first elastic body 410 depends on the spring constant of the floating elastic body 440. That is, torsional rigidity of the first elastic body 410 can be improved.

A shape of the floating elastic body 440 is not particularly limited. However, for example, it is preferable that an overall shape of the floating elastic body 440 is a substantially columnar shape, a substantially prismatic shape, or a substantially cross shape so as not to fit between winding pitches of the first elastic body 410. Alternatively, it is preferable that the floating elastic body 440 has a surface capable of coming into surface contact with the pinching portion 431 in the first sheet member 430x.

A length of the floating elastic body 440 can be set as appropriate depending on a size of a required torsional angle or the rigidity of the first elastic body 410. However, as a matter of course, the length of the floating elastic body 440 is set to be shorter than the length of the first elastic body 410. In order to ensure the surface contact with the pinching portion 431, it is preferable that the outer diameter of the floating elastic body 440 is substantially the same as the inner diameter of the first elastic body 410. In this manner, the floating elastic body 440 can be prevented from being misaligned in the radial direction based on a centrifugal force inside the first elastic body 410.

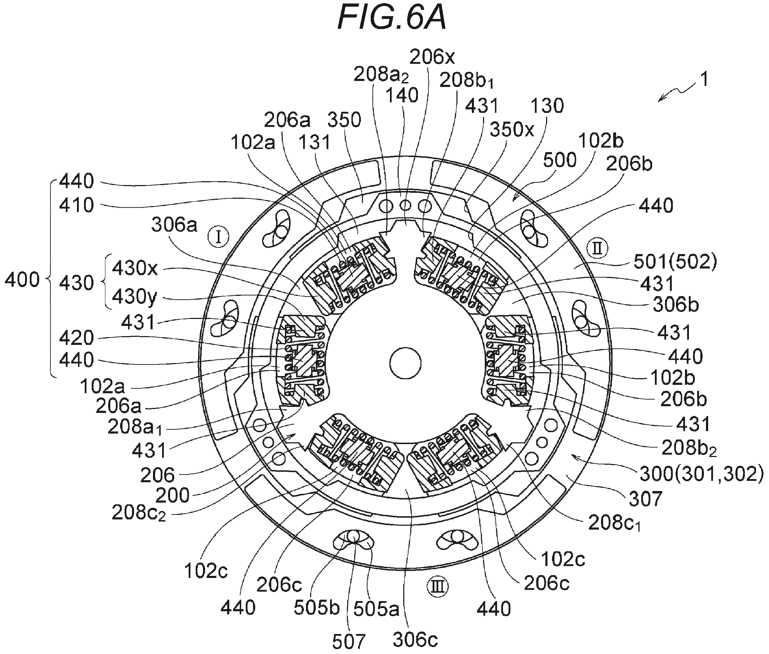

The floating elastic body 440 may be disposed not only inside the first elastic body 410 but also inside the second elastic body 420 (refer to Figs. 6A to 6E).

### 1-5. Dynamic Vibration Absorber 500

As illustrated in Figs. 2 to 4, in a broad way, the dynamic vibration absorber 500 can adopt a generally known centrifugal pendulum type that mainly includes a pair of mass bodies (first mass body 501 and second mass body 502) serving as weights attached to the pair of intermediate members 300 (first intermediate plate 301 and second intermediate plate 302), a rolling hole 505a disposed in each mass body, and a rolling shaft 507 disposed inside the rolling hole 505a.

More specifically, as illustrated in Figs. 2 to 4, the plate-shaped first mass body 501 and the plate-shaped second mass body 502 are paired together, and are located on a surface of the intermediate member 300 across both the first intermediate plate 301 and the second intermediate plate 302, specifically, at a position facing the outer peripheral end of the outer ring portion 307. That is, the first mass body 501 is located at a position facing the outer peripheral end of the outer ring portion 307 of the first intermediate plate 301, and the second mass body 502 is located at a position facing the outer peripheral end of the outer ring portion 307 of the second intermediate plate 302. Furthermore, the first mass body 501 and the second mass body 502 respectively have the rolling holes 505a, and the rolling shaft 507 is disposed to penetrate the two rolling holes 505a.

The first intermediate plate 301 that supports the first mass body 501 and the second intermediate plate 302 that supports the second mass body 502 respectively have a through-hole 505b for the rolling shaft 507 to penetrate from the rolling hole 505a disposed in the first mass body 501 to the rolling holes 505a disposed in the second mass body 502. The shape of the through-hole 505b is designed to correspond to the shape of the rolling hole 505a (to be described later). For example, as will be described later, in a case where the shape of the rolling hole 505a adopts a shape extending in a curved shape bulging toward the rotation center O of the intermediate member 300, (for example, in Fig. 2, a shape substantially projecting upward in the drawing), correspondingly, it is possible to adopt a shape extending in a curved shape (most preferably, an arc shape or a substantially arc shape) bulging outward in the radial direction of the intermediate member 300 (for example, in Fig. 2, a shape substantially projecting downward in the drawing).

The shapes of the first mass body 501 and the second mass body 502 are the same as each other, and the shape is not particularly limited. However, as illustrated in Figs. 2 to 4, it is possible to adopt a substantially arc shape formed along the shape (outer periphery) of the outer ring portion 307 of the intermediate member 300 so that the outer diameter as the damper device 1 does not increase.

The number of the rolling holes 505a disposed in the first mass body 501 and the second mass body 502 is not particularly limited. However, as illustrated in Figs. 2 and 4, in view of a weight balance, it is preferable that two or more rolling holes 505a are symmetrically disposed along the circumferential direction by using the center of the first mass body 501 (the second mass body 502) in the circumferential direction as an axis. As the shape of the rolling hole 505a, it is possible to adopt a shape capable of accommodating the rolling shaft 507 and extending in a curved shape (most preferably, an arc shape or a substantially arc shape) bulging toward the rotation center O of the intermediate member 300 (for example, in Fig. 2, a shape substantially projecting upward in the drawing). The number of the rolling holes 505a disposed in the first mass body 501 and the number of the rolling holes 505a disposed in the second mass body 502 are the same as each other.

As illustrated in Fig. 3, it is preferable that the rolling shaft 507 has a middle thick portion 507x in the vicinity of the center position when viewed in the axial direction so that the rolling shaft 507 can maintain a located state where the rolling shaft 507 penetrates the rolling hole 505a and the through-hole 505b.

Incidentally, if a unit including one first mass body 501, one second mass body 502, the rolling hole 505a, and the rolling shaft 507 is regarded as one dynamic vibration absorbing unit, the dynamic vibration absorber 500 according to the embodiment has three dynamic vibration absorbing units to correspond to the regions I to III. It is preferable that each of the dynamic vibration absorbing units is disposed at a position having the same diameter as the outer diameter of the spacer 101 (radial position having the above-described rivet R) with reference to the rotation center O. In other words, it is preferable to dispose the spacer 101 having the outer diameter at the radial position where each of the dynamic vibration absorbing units is disposed. In this manner, the intermediate member 300 can be reduced in diameter, and the damper device 1 as a whole can have a compact size in the radial direction.

### 2. Operation of Damper Device

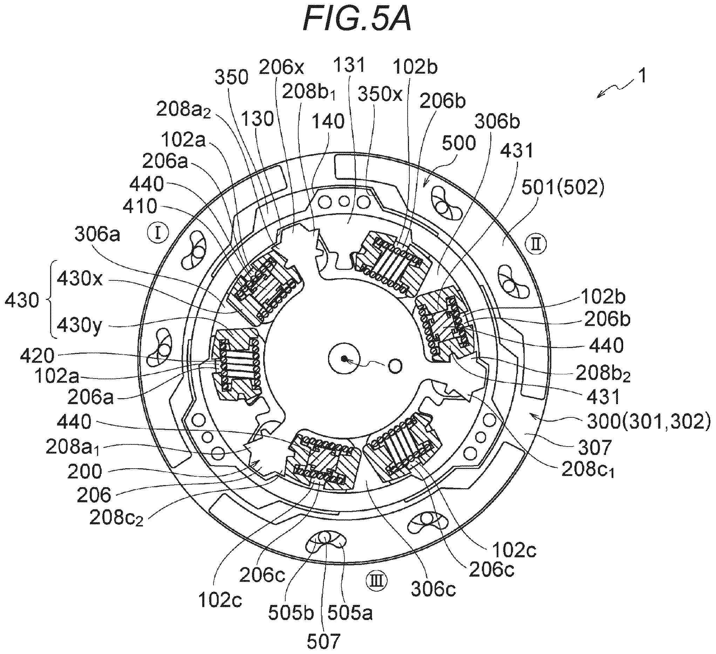

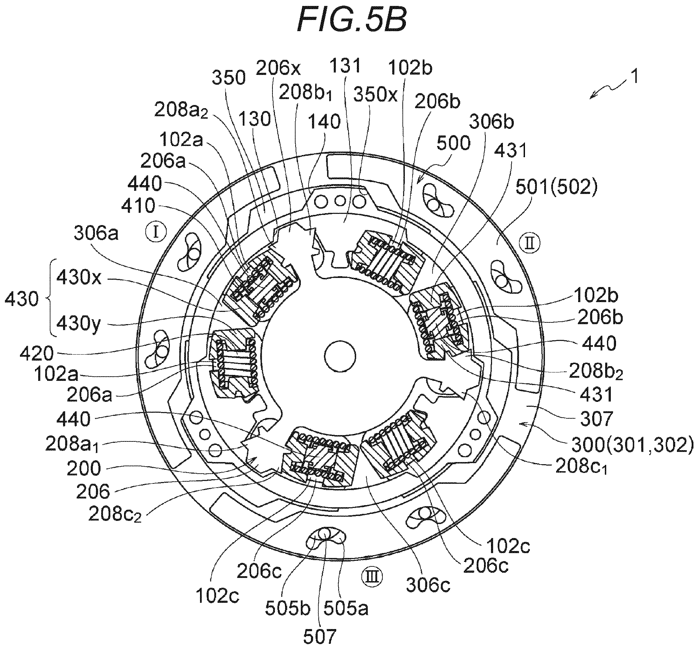

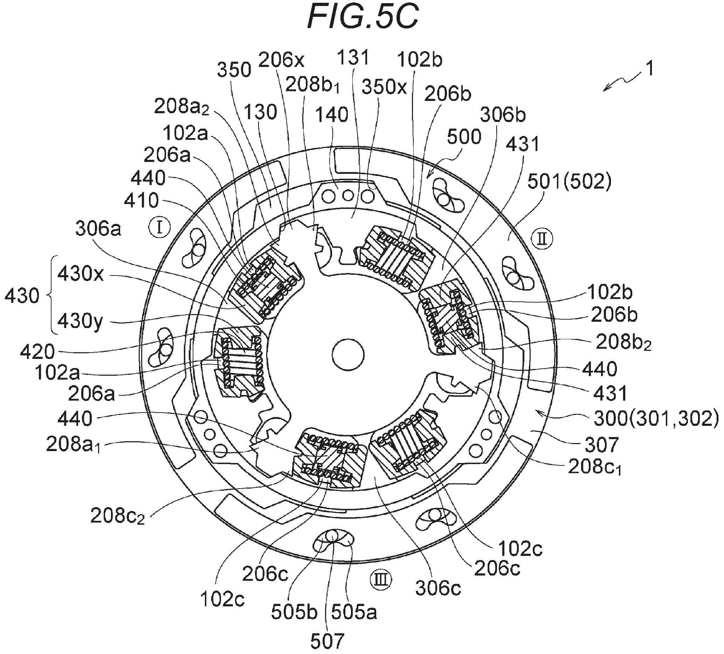

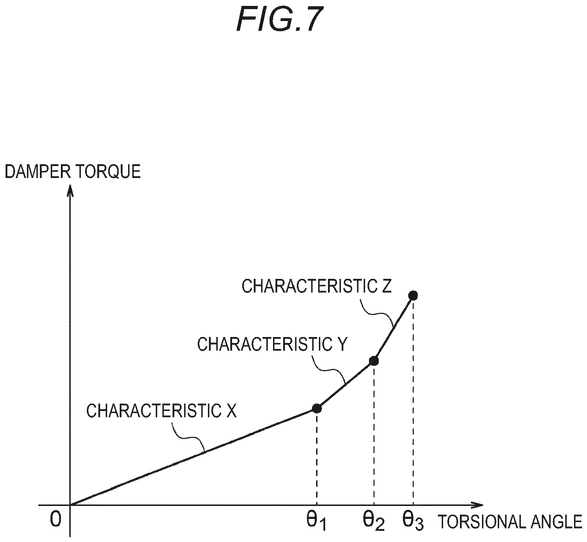

Next, an operation of the damper device 1 having the above-described configuration will be described with reference to Figs. 2, 5A to 5C, and 7. Figs. 5A and 5B are brief top views schematically illustrating a state where the damper device 1 illustrated in Fig. 2 is operated and the hub 200 relatively rotates with respect to the disc plate 100. Fig. 5C is a brief top view schematically illustrating a state where relative rotation is restricted after the damper device 1 illustrated in Fig. 2 is operated and the hub 200 relatively rotates with respect to the disc plate 100. Fig. 7 is a brief characteristic diagram schematically illustrating the torsional characteristic in the damper device 1 according to the embodiment.

The damper device 1 illustrated in Fig. 2 indicates a state where the drive force is transmitted to the damper device 1 from the drive source such as the engine and the motor so that the disc plate 100, the hub 200, and the intermediate member 300 rotate integrally with each other without the relative rotation.

As described above, the power output from the drive source such the engine and the motor is transmitted to the disc plate 100, the first sheet member 430x on one side, the first elastic body 410, the first sheet member 430x on the other side, the intermediate member 300, the second sheet member 430y on one side, the second elastic body 420, the second sheet member 430y on the other side, and the hub 200 in this order. Focusing on the region I, the power is transmitted from the first other end surface 104a₂ disposed in the disc plate 100 to the first sheet member 430x on one side. While the first sheet member 430x on one side bends the first elastic body 410, the power is transmitted to the first sheet member 430x on the other side. Furthermore, the first sheet member 430x on the other side transmits the power to the first connecting portion 306a in the intermediate member 300. While bending the second elastic body 420 via the second sheet member 430y on one side, the first connecting portion 306a transmits the power to the second sheet member 430y on the other side. Finally, the power is transmitted from the second sheet member 430y on the other side to the hub 200 (engagement portion 208a, on the first one end side), and the power is transmitted to the hub 200.

In the regions II and III, the power is similarly transmitted by operating each of the configuration elements.

In this power transmission path, the hub 200 and the intermediate member 300 relatively rotate with respect to each disc plate 100. Fig. 5A schematically illustrates a state where the hub 200 and the intermediate member 300 relatively rotate with respect to the disc plate 100 by a predetermined torsional angle θ₁ (rotational phase difference is θ₁), In this case, the hub 200 and the intermediate member 300 rotate with respect to the disc plate 100 in the same rotation direction as that of the power transmission (in the embodiment, counterclockwise). More specifically, the hub 200 rotates counterclockwise by the rotational phase difference θ₁ while bending the first elastic body 410. At the same time, the intermediate member 300 rotates counterclockwise by the rotational phase difference θ₁ while bending the second elastic body 420. At this time, the pinching portion 431 of the pair of first sheet members 430x supporting the first elastic body 410 comes into contact with the floating elastic body 440 to be accommodated inside the first elastic body 410.

Here, as described above, the spring constant of the floating elastic body 440 is set to be higher than the spring constant of the first elastic body 410. Accordingly, after the pinching portion 431 of the first sheet member 430x pinches the floating elastic body 440 (in a case where the torsional angle is equal to or larger than θ₁), the torsional rigidity of the first elastic body 410 becomes higher.

As illustrated in Fig. 5A, in a case of the torsional angle θ₁, the tip portion 206x of the flange 206 is not in contact with the first stopper 130. Accordingly, the relative rotation of the hub 200 is not restricted. Similarly, the side wall 350x of the notch 350 disposed in the intermediate member 300 is not in contact with the second stopper 140. Accordingly, the relative rotation of the intermediate member 300 is also not restricted.

Next, referring to Fig. 5B, a state will be described where the hub 200 and the intermediate member 300 relatively rotate with respect to the disc plate 100 by the torsional angle θ₂ (θ₂>θ₁) (rotational phase difference is θ₂). In this case, the hub 200 and the intermediate member 300 rotate further counterclockwise with respect to the disc plate 100 from the state illustrated in Fig. 5A. More specifically, as described above, the hub 200 further rotates counterclockwise by the rotational phase difference θ₂-θ₁ while bending the first elastic body 410 having the high torsional rigidity. At the same time, the intermediate member 300 rotates further counterclockwise by the rotational phase difference θ₂-θ₁ while bending the second elastic body 420.

In this case, as illustrated in Fig. 5B, the side wall 350x of the notch 350 disposed in the intermediate member 300 comes into contact with the second stopper 140. In this manner, the relative rotation of the intermediate member 300 with respect to the disc plate 100 is restricted. On the other hand, the tip portion 206x of the flange 206 is not in contact with the first stopper 130. Accordingly, the relative rotation of the hub 200 with respect to the disc plate 100 is not yet restricted. However, as the relative rotation of the intermediate member 300 is restricted (elastic deformation of the second elastic body 420 is restricted), the substantial spring constant in the first elastic body 410 further increases. As a result, the torsional rigidity further increases with respect to the relative rotation of the hub 200.

Next, referring to Fig. 5C, a state will be described where the hub 200 relatively rotates with respect to the disc plate 100 by a torsional angle θ₃ (θ₃>θ₂) (rotational phase difference is θ₃). In this case, the hub 200 rotates further counterclockwise from the state illustrated in Fig. 5B with respect to the disc plate 100 (relative rotation of the intermediate member 300 is already restricted by the second stopper 140). More specifically, as described above, the hub 200 rotates further counterclockwise by a rotational phase difference θ₃-θ₂ while bending the first elastic body 410 having the higher torsional rigidity. Finally, the tip portion 206x of the flange 206 comes into contact with the first stopper 130. In this manner, the relative rotation of the hub 200 is also restricted.

With regard to a series of operations of the damper device 1 described above, the damper device 1 according to the embodiment has the three stage torsional characteristic. More specifically, as illustrated in Fig. 7, the damper device 1 according to the embodiment has a first stage characteristic X in a range where the torsional angle is from 0 to θ₁, has a second stage characteristic Y having the higher torsional rigidity than the characteristic X in a range where the torsional angle is from θ₁ to θ₂, and has a third stage characteristic Z having the higher torsional rigidity than the characteristic Y in a range where the torsional angle is from θ₂ to θ₃. In this manner, the damper device 1 according to the embodiment can suppress a sudden characteristic change in the torsional rigidity (the characteristic can be gradually changed from the characteristic X to the characteristic Z). Therefore, an impact or vibration caused by the characteristic change can be suppressed.

### 3. Configuration and Operation of Damper Device according to Another Embodiment

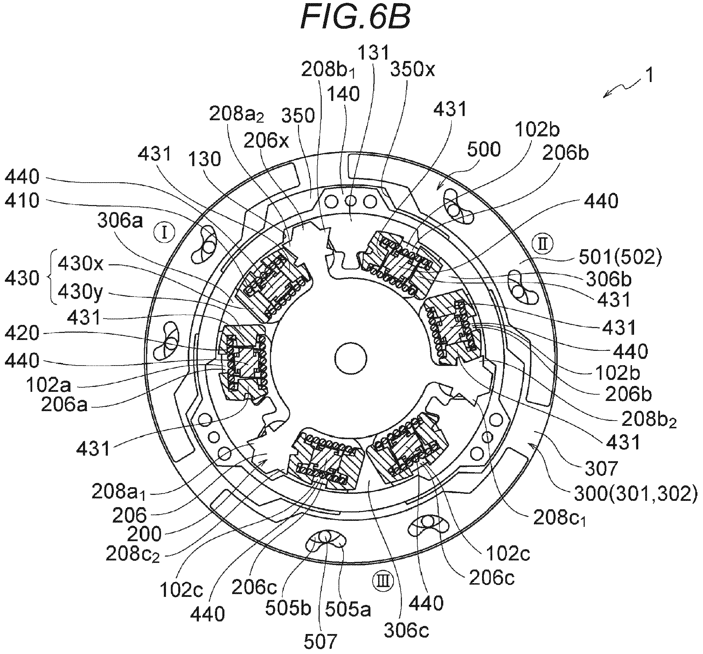

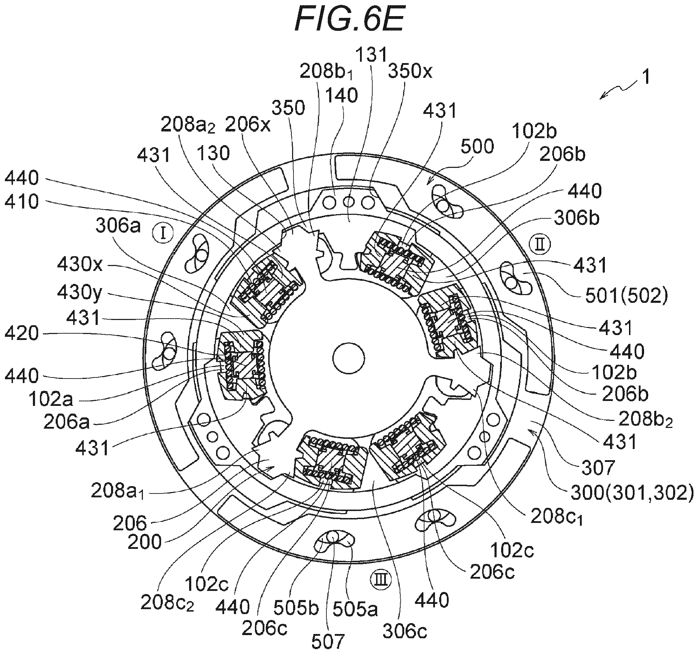

Next, a configuration and an operation of the damper device 1 according to another embodiment will be described with reference to Figs. 6A to 6E. Fig. 6A is a brief top view schematically illustrating the configuration of the damper device 1 according to another embodiment. Figs. 6B to 6D are brief top views schematically illustrating a state where the damper device 1 illustrated in Fig. 6A is operated and the hub 200 relatively rotates with respect to the disc plate 100. Fig. 6E is a brief top view schematically illustrating a state where the relative rotation is restricted after the damper device 1 illustrated in Fig. 6A is operated and the hub 200 relatively rotates with respect to the disc plate 100. The configuration and the operation of the damper device 1 according to another embodiment are almost common to those of the damper device 1 according to the above-described embodiment. Accordingly, detailed description of the common configuration and operation will be omitted.

The damper device 1 according to another embodiment is different from the above-described embodiment in that the floating elastic body 440 is accommodated inside the second elastic body 420 as illustrated in Fig. 6A (common configuration in the regions I to III). Accordingly, the pinching portion 431 for pinching the floating elastic body 440 is also disposed in the pair of second sheet members 430y supporting the second elastic body 420. Other points are common to those of the damper device 1 according to the above-described embodiment.

The operation of the damper device 1 according to another embodiment is basically the same as the operation of the damper device 1 according to the above-described embodiment. However, the floating elastic body 440 is also disposed inside the second elastic body 420. Therefore, the damper device 1 according to another embodiment has a four stage torsional characteristic.

More specifically, Fig. 6B schematically illustrates a state where the hub 200 and the intermediate member 300 relatively rotate with respect to the disc plate 100 by a predetermined torsional angle θ_{A} (rotational phase difference is θ_{A}). In this case, as in the above-described embodiment, the hub 200 rotates counterclockwise by the rotational phase difference θ_{A} while bending the first elastic body 410. At the same time, the intermediate member 300 rotates counterclockwise by the rotational phase difference θ_{A} while bending the second elastic body 420. At this time, the pinching portion 431 of the pair of first sheet members 430x supporting the first elastic body 410 comes into contact with the floating elastic body 440 to be accommodated inside the first elastic body 410.

Here, as described above, the spring constant of the floating elastic body 440 is set to be higher than the spring constant of the first elastic body 410. Accordingly, after the pinching portion 431 of the first sheet member 430x pinches the floating elastic body 440 (in a case where the torsional angle is equal to or larger than θ_{A}), the torsional rigidity of the first elastic body 410 becomes higher (torsional characteristic is changed from the first stage torsional characteristic to the second stage torsional characteristic).

As illustrated in Fig. 6B, in a case of the torsional angle θ_{A}, the tip portion 206x of the flange 206 is not in contact with the first stopper 130. Accordingly, the relative rotation of the hub 200 is not restricted. Similarly, the side wall 350x of the notch 350 disposed in the intermediate member 300 is not in contact with the second stopper 140. Accordingly, the relative rotation of the intermediate member 300 is also not restricted. The pinching portion 431 of the pair of second sheet members 430y supporting the second elastic body 420 is not in contact with the floating elastic body 440 accommodated inside the second elastic body 420.

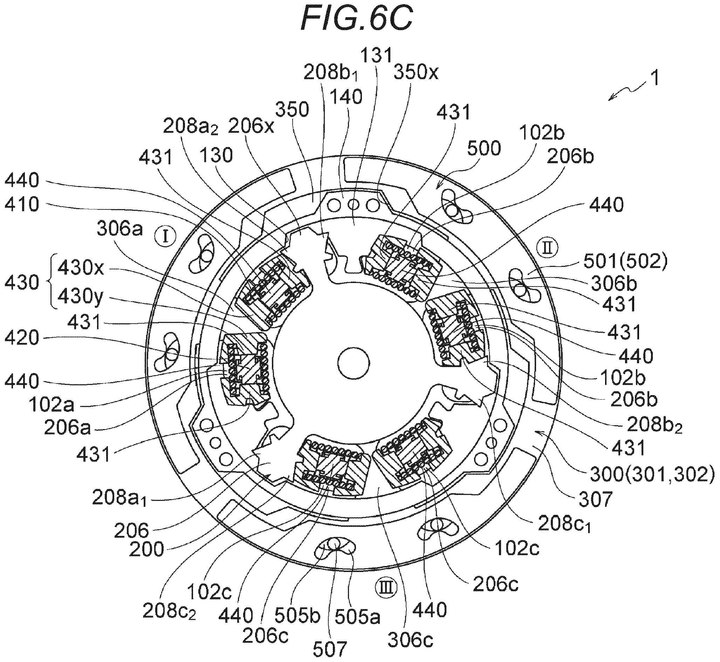

Next, referring to Fig. 6C, a state will be described where the hub 200 and the intermediate member 300 relatively rotate with respect to the disc plate 100 by a torsional angle θ_{B} (θ_{B}>θ_{A}) (rotational phase difference is θ_{B}). In this case, the hub 200 and the intermediate member 300 rotate further counterclockwise with respect to the disc plate 100 from the state illustrated in Fig. 6B. More specifically, as described above, the hub 200 rotates further counterclockwise by a rotational phase difference θ_{B}-θ_{A} while bending the first elastic body 410 having the higher torsional rigidity. At the same time, the intermediate member 300 rotates further counterclockwise by the rotational phase difference θ_{B}-θ_{A} while bending the second elastic body 420.

In this case, the pinching portion 431 of the pair of second sheet members 430y supporting the second elastic body 420 comes into contact with the floating elastic body 440 accommodated inside the second elastic body 420. Therefore, after the pinching portion 431 of the second sheet member 430y pinches the floating elastic body 440 (in a case where the torsional angle is larger than θ_{B}), the torsional rigidity of the second elastic body 420 becomes higher (torsional characteristic is changed from the second stage torsional characteristic to the third stage torsional characteristic).

As illustrated in Fig. 6C, even in a case of the torsional angle θ_{B}, the tip portion 206x of the flange 206 is not in contact with the first stopper 130 without any change. Accordingly, the relative rotation of the hub 200 is not restricted. Similarly, the side wall 350x of the notch 350 disposed in the intermediate member 300 is not in contact with the second stopper 140. Accordingly, the relative rotation of the intermediate member 300 is not restricted.

It is preferable to appropriately adjust the spring constant of the first elastic body 410 and the second elastic body 420 or, for example, the length of the floating elastic body 440 accommodated inside the first elastic body 410 and the floating elastic body 440 accommodated inside the second elastic body 420 so that the change timing change from the first stage characteristic to the second stage characteristic is not the same as the change timing change from the second stage characteristic to the third stage characteristic. For example, the spring constant of the coil spring used for the first elastic body 410 may be set to be lower than the spring constant of the coil spring used for the second elastic body 420.

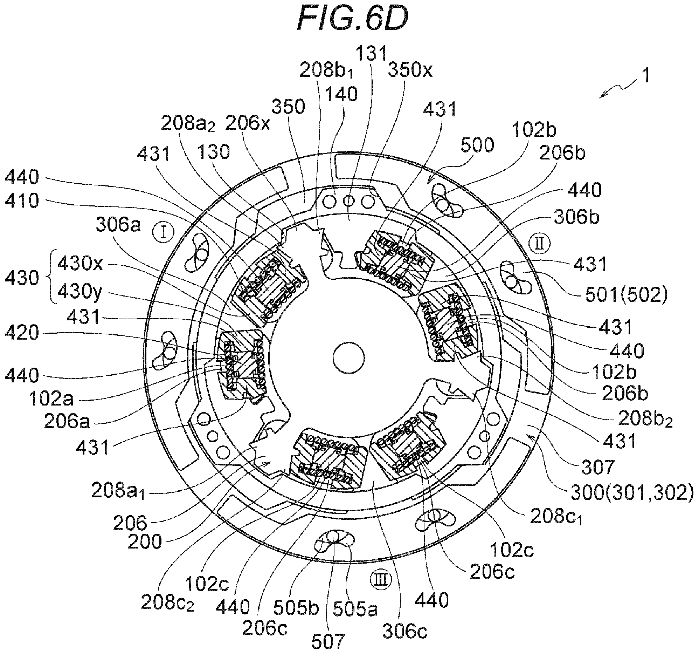

Next, referring to Fig. 6D, a state will be described where the hub 200 and the intermediate member 300 relatively rotate with respect to the disc plate 100 by a torsional angle θ_{C} (θ_{C}>θ_{B}) (rotational phase difference is θ_{C}). In this case, the hub 200 and the intermediate member 300 rotate further counterclockwise with respect to the disc plate 100 from the state illustrated in Fig. 6C. More specifically, as described above, the hub 200 rotates further counterclockwise by a rotational phase difference θ_{C}-θ_{B} while bending the first elastic body 410 having the higher torsional rigidity. At the same time, as described above, the intermediate member 300 rotates further counterclockwise by the rotational phase difference θ_{C}-θ_{B} while bending the second elastic body 420 having the higher torsional rigidity.

In this case, as illustrated in Fig. 6D, the side wall 350x of the notch 350 disposed in the intermediate member 300 comes into contact with the second stopper 140. In this manner, the relative rotation of the intermediate member 300 with respect to the disc plate 100 is restricted. On the other hand, the tip portion 206x of the flange 206 is not in contact with the first stopper 130. Accordingly, the relative rotation of the hub 200 with respect to the disc plate 100 is not yet restricted. However, as the relative rotation of the intermediate member 300 is restricted (elastic deformation of the second elastic body 420 is restricted), the substantial spring constant in the first elastic body 410 further increases. As a result, the torsional rigidity further increases with respect to the relative rotation of the hub 200 (torsional characteristic is changed from the third stage torsional characteristic to the fourth stage torsional characteristic).

Next, referring to Fig. 6E, a state will be described where the hub 200 relatively rotates with respect to the disc plate 100 by a torsional angle θ_{D} (θ_{D}>θ_{C}) (rotational phase difference is θ_{D}). In this case, the hub 200 rotates further counterclockwise with respect to the disc plate 100 from the state illustrated in Fig. 6D (relative rotation of the intermediate member 300 is already restricted by the second stopper 140). More specifically, as described above, the hub 200 rotates further counterclockwise by a rotational phase difference θ_{D}-θ_{C} while bending the first elastic body 410 having the higher torsional rigidity. Finally, the tip portion 206x of the flange 206 comes into contact with the first stopper 130. In this manner, the relative rotation of the hub 200 is also restricted.

With regard to a series of operations of the damper device 1 described above, the damper device 1 according to another embodiment has the four stage torsional characteristic. More specifically, the damper device 1 has a first characteristic on the first stage in a range where the torsional angle is from 0 to θ_{A}, has a second characteristic on the second stage having the higher torsional rigidity than the first characteristic in a range where the torsional angle is from θ_{A} to θ_{B}, has a third characteristic on the third stage having the higher torsional rigidity than the second characteristic in a range where the torsional angle is from θ_{B} to θ_{C}, and has a fourth characteristic on the fourth stage having the higher torsional rigidity than the third characteristic in a range where the torsional angle is from θ_{C} to θ_{D}. In this manner, compared to the damper device 1 according to the above-described embodiment, the damper device 1 according to another embodiment can further suppress a sudden characteristic change in the torsional rigidity. Accordingly, the impact or the vibration caused by the characteristic change can be more efficiently suppressed.

Hitherto, as described above, various embodiments have been described as examples. However, the above-described embodiments are merely examples, and are not intended to limit the scope of this disclosure. The above-described embodiments can be implemented in various other forms, and can be omitted, substituted, or modified in various ways within the scope not departing from the gist of this disclosure. In addition, each configuration, shape, size, length, width, thickness, height, and the number can be changed as appropriate.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. The scope of the invention is defined by the appended claims.

## Claims

1. A damper device (1) comprising:
a first rotating body (100);
a second rotating body (200) coaxial with the first rotating body (100), and relatively rotating with respect to the first rotating body (100);
an intermediate member (300) coaxial with the first rotating body (100) and the second rotating body (200) and relatively rotating with respect to the first rotating body (100); and
an elastic mechanism (400) that has
a first elastic body (410) elastically coupling the first rotating body (100) and the intermediate member (300) with each other in a rotation direction,
a second elastic body (420) elastically coupling the intermediate member (300) and the second rotating body (200) with each other in the rotation direction,
a pair of first sheet members (430x) supporting the first elastic body (410),
a pair of second sheet members (430y) supporting the second elastic body (420), and
wherein the first rotating body (100) further has a first stopper (130) restricting relative rotation of the second rotating body (200), and a second stopper (140, 140x) restricting relative rotation of the intermediate member (300), and **characterised in that**
a floating elastic body (440) is accommodated inside at least one of the first elastic body (410) and the second elastic body (420 and **in that**
the first rotating body (100) has a pair of plate members (100A, 100B) and a spacer (101) to be accommodated between the pair of plate members (100A, 100B), the second stopper (140x) is disposed in a plate member (100A, 100B), and the first stopper (130) is disposed in the spacer (101).

2. The damper device according to claim 1, wherein
a pinching portion (431) for pinching the floating elastic body (440) is provided to at least one of the pair of first sheet members (430x) and the pair of second sheet members (430y).

3. The damper device according to claim 1 or 2, wherein
a pair of the intermediate members (300) are disposed across the second rotating body (200).

## Patentansprüche

1. Dämpfervorrichtung (1), umfassend:
einen ersten rotierenden Körper (100),
einen zweiten rotierenden Körper (200), der koaxial zu dem ersten rotierenden Körper (100) liegt und bezüglich des ersten rotierenden Körpers (100) relativ rotiert,
ein Zwischenelement (300), das koaxial zu dem ersten rotierenden Körper (100) und dem zweiten rotierenden Körper (200) liegt und bezüglich des ersten rotierenden Körpers (100) relativ rotiert, und
einen elastischen Mechanismus (400), der
einen ersten elastischen Körper (410), der den ersten rotierenden Körper (100) und das Zwischenelement (300) miteinander in einer Rotationsrichtung elastisch koppelt,
einen zweiten elastischen Körper (420), der das Zwischenelement (300) und den zweiten rotierenden Körper (200) miteinander in der Rotationsrichtung elastisch koppelt,
ein Paar von ersten Blattelementen (430x), die den ersten elastischen Körper (410) tragen,
ein Paar von zweiten Blattelementen (430y), die den zweiten elastischen Körper (420) tragen, aufweist, und
wobei
der erste rotierende Körper (100) ferner einen ersten Anschlag (130), der eine relative Rotation des zweiten rotierenden Körpers (200) einschränkt, und einen zweiten Anschlag (140, 140x) aufweist, der eine relative Rotation des Zwischenelements (300) einschränkt, und **dadurch gekennzeichnet, dass**
ein schwebender elastischer Körper (440) im Inneren von mindestens einem von dem ersten elastischen Körper (410) und dem zweiten elastischen Körper (420) aufgenommen ist und dass
der erste rotierende Körper (100) ein Paar von Plattenelementen (100A, 100B) und einen Abstandshalter (101) aufweist, der zwischen dem Paar von Plattenelementen (100A, 100B) aufgenommen werden soll, wobei der zweite Anschlag (140x) in einem Plattenelement (100A, 100B) angeordnet ist und der erste Anschlag (130) in dem Abstandshalter (101) angeordnet ist.

2. Dämpfervorrichtung nach Anspruch 1, wobei
eine Klemmungssektion (431) zum Klemmen des schwebenden elastischen Körpers (440) mindestens einem von dem Paar von ersten Blattelementen (430x) und dem Paar von zweiten Blattelementen (430y) bereitgestellt wird.

3. Dämpfervorrichtung nach Anspruch 1 oder 2, wobei
ein Paar der Zwischenelemente (300) über dem zweiten rotierenden Körper (200) angeordnet ist.

## Revendications

1. Dispositif d'amortisseur (1) comprenant :
un premier corps rotatif (100) ;
un second corps rotatif (200) coaxial avec le premier corps rotatif (100), et tournant de manière relative par rapport au premier corps rotatif (100) ;
un élément intermédiaire (300) coaxial avec le premier corps rotatif (100) et le second corps rotatif (200) et tournant de manière relative par rapport au premier corps rotatif (100) ; et
un mécanisme élastique (400) qui a :
un premier corps élastique (410) couplant élastiquement le premier corps rotatif (100) et l'élément intermédiaire (300) entre eux dans une direction de rotation,
un second corps élastique (420) couplant élastiquement l'élément intermédiaire (300) et le second corps rotatif (200) entre eux dans la direction de rotation,
une paire de premiers éléments de feuille (430x) supportant le premier corps élastique (410),
une paire de seconds éléments de feuille (430y) supportant le second corps élastique (420), et
dans lequel :
le premier corps rotatif (100) a, en outre, une première butée (130) limitant la rotation relative du second corps rotatif (200) et une seconde butée (140, 140x) limitant la rotation relative de l'élément intermédiaire (300), et
**caractérisé en ce que** :
un corps élastique flottant (440) est logé à l'intérieur d'au moins l'un parmi le premier corps élastique (410) et le second corps élastique (420), et **en ce que** :
le premier corps rotatif (100) a une paire d'éléments de plaque (100A, 100B) et un dispositif d'espacement (101) destiné à être logé entre la paire d'éléments de plaque (100A, 100B), la seconde butée (140x) est disposée dans un élément de plaque (100A, 100B) et la première butée (130) est disposée dans le dispositif d'espacement (101).

2. Dispositif d'amortisseur selon la revendication 1, dans lequel :
une partie de pincement (431) pour pincer le corps élastique flottant (440) est prévue sur au moins l'une parmi la paire de premiers éléments de feuille (430x) et la paire de seconds éléments de feuille (430y).

3. Dispositif d'amortisseur selon la revendication 1 ou 2, dans lequel :
une paire des éléments intermédiaires (300) est disposée sur le second corps rotatif (200).
